# EUROPÄISCHE PATENTSCHRIFT

(11) **EP 2 242 606 B1**
(45) Veröffentlichungstag und Bekanntmachung des Hinweises auf die Patenterteilung: **09.01.2013**
(21) Anmeldenummer: 08862017.4
(22) Anmeldetag: 03.12.2008
(51) Int. Cl.: B23K 26/08, B23K 26/34, B23K 26/42, B29C 67/00, B23K 101/04

(54) **VERFAHREN UND VORRICHTUNG ZUR HERSTELLUNG VON RINGFÖRMIGEN, ROTATIONSSYMMETRISCHEN WERKSTÜCKEN AUS METALL- UND/ODER KERAMIKPULVER UNTER VERWENDUNG VON METALL- UND/ODER KERAMIKPULVERN UND EINEM LASERSTRAHL**
METHOD AND DEVICE FOR PRODUCING ANNULAR, ROTATIONALLY SYMMETRICAL WORKPIECES MADE OF METAL AND/OR CERAMIC POWDER, USING METAL AND/OR CERAMIC POWDERS AND A LASER BEAM
PROCÉDÉ ET DISPOSITIF DE FABRICATION DE PIÈCES ANNULAIRES, SYMÉTRIQUES EN ROTATION EN POUDRES MÉTALLIQUES ET/OU CÉRAMIQUES, AVEC UTILISATION D'UN FAISCEAU LASER ET DES POUDRES MÉTALLIQUES ET/OU CÉRAMIQUES

(30) Priorität: 14.12.2007 DE 102007060964
(43) Veröffentlichungstag der Anmeldung: 27.10.2010
(73) Patentinhaber: Sieber Forming Solutions GmbH, 24558 Henstedt-Ulzburg (DE)
(72) Erfinder: GENSERT, Hilmar, 04849 Bad Düben (DE)
(74) Vertreter: Tragsdorf, Bodo
(86) Internationale Anmeldenummer: PCT/EP2008/010219
(87) Internationale Veröffentlichungsnummer: WO 2009/077081

(56) Entgegenhaltungen:
- US-A- 2 299 747
- US-A- 4 323 756
- US-A- 4 775 092
- US-A1- 2005 029 235
- US-A1- 2007 044 306

## Beschreibung

Die Erfindung bezieht sich auf ein Verfahren zur Herstellung von Ringen oder topfförmigen Kernen als rotationssymmetrische Werkstücke aus Metall- und/oder Keramikpulver und eine Vorrichtung zur Durchführen duses Verfahren gemäß dem Oberbegriff des Ansprüch 10 (siche, z.B., US 2 299 747). Diese werden als Matrizen für Werkzeuge zum Verpressen von Pulver oder zur Massivumformung von Werkstücken oder Bauteilen aus Metall eingesetzt. Ferner bezieht sich die Erfindung auf eine zur Durchführung des Verfahrens geeignete Vorrichtung.

Zur Massenfertigung von Bautellen aus Metall, wie Aluminium oder Stahl, hat In der Praxis die Massivumformung (Kalt-oder Warmumformen) eine breite Anwendung gefunden.

Bei den Verfahren zur Massivumformung treten hohe Umformkräfte auf und aufgrund großer Losgrößen werden an die Umformwerkzeuge besonders hohe mechanische Anforderungen gestellt. Die Prozessgrenzen sind dabei meist durch einen hohen WerkzeugverschleiB gegeben. Die Oberflächen von Werkzeug und Werkstück haben entscheidenden Einfluss auf den tribologischen Zustand und damit die Prozessgrenzen, die Prozessstabliltät und die Werkzeugiebensdauer. Zur Herstellung von Umformwerkzeugen werden daher auch Werkstoffe auf Basis von Hartmetallen oder Keramik eingesetzt.

Hartmetaile sind Verbundwerkstoffe, die aus einer Kombination von metallischen Hartstoffen, wie Carbide der Metaile Wolfram, Titan, Tantal und/oder Vanadium, und Bindern oder Bindemetallen mit relativ welchen, zähen Metallen, wie beispleisweise Cobalt oder Nickel, bestehen, wobei der Anteil an Hartstoffen überwiegt. Durch verschledene Kombinationsmöglichkeiten, hinsichtlich Binder, Hartstoff, Korngröße und Menge lassen sich verschiedene Elgenschaften erzielen.

Zur Herstellung von Hartmetallen werden die Ausgangsstoffe gemahlen und vermischt, zu Formkörpern oder Halbzeugen verpresst und nachfolgend unter Schutzgas oder Vakuum bei Temperaturen oberhalb von ca. 1300 bis 1550 °C gesintert und In der Regel nachverdichtet. Die so hergestellten Formkörper bzw. Halbzeuge müssen nachträglich noch auf Endmaß mechanisch bearbeitet werden.

Bei Herstellung von Hartmetallringen oder Kernen für Matrizen wird die Hartmetallpulverzusammensetzung zu Ringen verpresst. Die Hartmetallrohringe werden abschließend mechanisch bearbeitet.

Keramikringe werden In ähnlicher Weise, ausgehend von Pulver durch plastische Formgebung und nachfolgendes Sintern, hergestellt.

Die vorgenannte Verfahrensweise zur Herstellung von Hartmetall- oder Keramikringen ist technologisch sehr aufwendig und nur bei sehr großen Stückzahlen wirtschaftlich.

Zur Bildung der gepressten Ringrohlinge sind für Jede Abmessung gesonderte Pressformen erforderlich. Für eine Kleinserienfertigung für eine Vielzahl an unterschledlich dimensionierten Ringen verschiedener Qualitäten ist diese Verfahrensweise aus Wirtschaftlichkeitsgründen ungeeignet.

Bekannt (z.B. US-A-2 299 747) ist ein Verfahren zur Herstellung von ringförmigen, rotationssymmetrischen Werkstücken. In eine rotierbare Spanneinrichtung wird beidseitig ein Dom als Trägerkern eingespannt und in Rotation versetzt, wobei der Trägerkern einen Abschnitt besitzt, dessen Außendurchmesser dem Innendurchmesser des herzustellenden Werkstückes entspricht. In einem definierten Abstand zur Spanneinrichtung wird auf die Mantelfläche des Trägerkerns mittels eines Lichtbogengerätes Schweißdraht aufgeschmolzen und schichtweise bis zur Ausbildung der endgültigen Wanddicke des herzustellenden Rohres aufgetragen. Nach erfolgter Abkühlung wird der Trägerkern wieder aus dem Werkstück-Rohling entfernt und der Rohling an seiner Außenseite mechanisch bis auf Endmaß bearbeitet. Die zugehörige Vorrichtung weist die im Oberbegriff von Anspruch 10 angegebenen Merkmale auf.

Der Erfindung liegt die Aufgabe zugrunde, ein Verfahren zur Herstellung von Ringen oder topfförmigen Kernen als rotationssymmetrische Werkstücke aus Metall- und/oder Keramikpulver zu schaffen, das sich durch einen geringeren verfahrenstechnischen Aufwand auszeichnet und eine kurzfristige Umstellung auf unterschledliche Qualitäten ermöglicht. Ferner soll eine zur Durchführung des Verfahrens geeignete Vorrichtung geschaffen werden. Erfindungsgemäß wird die Aufgabe durch die im Anspruch 1 angegebenen Merkmale gelöst. Vorteilhafte Ausgestaltungen und Weiterbildungen sind Gegenstand der Ansprüche 2 bis 9. Eine zur Durchführung des Verfahrens geeignete Vorrichtung ist Gegenstand des Anspruchs 10. Die Ansprüche 11 bis 14 beziehen sich auf vorteilhafte Ausgestaltungen der Vorrichtung.

Die Herstellung rotationssymmetrischer Werkstücke, wie zum Beispiel Kerne für Matrizen mit einem Innendurchmesser von 5 bis 50 mm und einem Außendurchmesser von 15 bis 150 mm erfolgt durch einen Urformprozess unter Verwendung eines "verlorenen Kerns" als Trägerkern.

Unter dem Begriff Matrize ist an sich ein Werkzeug zu verstehen, das aus einem Kern mit einem Formhohlraum und mindestens einer Armlerung besteht. In der Fachliteratur wird Jedoch der Begrift Matrize auch für den Kern bzw. das eigentliche Formwerkzeug verwendet. Der Trägerkern oder ein schaftförmiges Element mit mindestens einem Trägerkern wird In eine rotierbare Spanneinrichtung eingespannt und In Rotation versetzt, vorzugsweise mit einer Drehzahl von 50 bis 300 min⁻¹. Der Trägerkern besitzt mindestens einen Abschnitt, der In seinem Außendurchmesser dem Innendurchmesser des herzustellenden Werkstückes entspricht und aus hochtemperaturbeständigem Material besteht.

In einem definierten Abstand zur Spanneinruchtung wird auf die Mantelfläche des Trägerkerns mittels eines Laserkopfes Metall- oder Keramikpulver aufgeschmolzen und schichtwelse bis zur Ausbildung der endgültigen Wanddicke des Werkstück-Rohlings aufgetragen. Nach erfolgter Abkühlung wird der Trägerkern teilwelse oder vollständig wieder aus dem Werkstück-Rohling entfernt. Der Rohlling wird dann abschließend an seinen Außenseiten mechanisch bis auf Endmaß bearbeltet.

Diese Verfahrensweise ermöglicht eine sehr wirtschaftliche Herstellung von rotationssymmetrischen Werkstücken als Kleinserienfertigung. Im Vergleich zu den bekannten Verfahren, Pressen der Werkstücke In einer Form oder mechanische Bearbeitung eines Hartmetallrohlings, lassen sich die Fertigungszeiten aufgrund einer geringeren Anzahl an Bearbeitungsvorgängen erheblich verkürzen. Bei den herzustellenden Werkstücken handelt es sich überwisgend um Werkzeuge aus Hartmetall für die Massivumformung, die unterschledlich hohen mechanischen Belastungen ausgesetzt sind. Der Hersteller der Werkzeuge hat nunmehr die Möglichkeit, auf spezielle Kundenwünsche hinsichtlich der geforderten Festigkeitseigenschaften für einzeine Werkzeuge durch Auswahl geeigneter Pulversorten schnell zu reagieren und kann kurzfristige Lieferfristen gewährleisten.

Das Auftragen von mittels eines Laserkopfes geschmolzenem Metallpulver ist an sich als sogenanntes Auftragsschweißen bekannt und wird zum Auftragen von speziellen Verschleißschichten auf bereits vorgefertigte Werkstücke oder für Reparaturzwecke zum Ersatz abgenutzter Werkstückoberflächen eingesetzt. Die hierzu bekannten Beschichtungsvorrichtungen bestehen aus einem Laser mit einem Laserkopf und einer Pulverzuführung, wobei das Pulver koaxial zugeführt und Im Arbeitspunkt des Lasers aufgeschmolzen wird.

Die vorgeschlagene Verfahrensweise ermöglicht die Herstellung von rotationssymmetrischen Umformwerkzeugen, wie Ringe oder Kerne, durch einen vollständigen schichtenartigen Werkstückaufbau. In Abhängigkeit von der Länge des Werkstückes wird das geschmolzene Pulver durch mehrere umlaufende, sich überlagernde Spuren nach Art eines spiralförmigen Wickelvorganges auf den rotierenden Trägerkern aufgetragen, bis zur Ausbildung der endgültigen Wanddicke des Werkstückes. Die einzelnen Spuren sich überlagernder Schichten können deckungsgleich oder versetzt zueinander aufgetragen werden. Für den Werkstückaufbau kann eine Materialzusammensetzung auf Basis von Metall- oder Keramikpulver oder auch als Gemisch beider Komponenten verwendet werden oder der Schichtaufbau kann auch durch Einsatz unterschiedlicher Materialzusammensetzungen erfolgen. Letzteres ermöglicht den Aufbau von Werkstücken mit radial unterschiedlichen Festigkeitselgenschaften. Die unterschiedlichen Materialien sind dabei so aufeinander abzustimmen, dass diese sich schmetzmetallurgisch miteinander zu einer Einheit verbinden.

Der eingesetzte Trägerkern besteht aus einem hochtemperaturbeständigem Material, vorzugsweise Kohlenstoffelektrodenmaterial oder Stahl, das deutlich welcher ist, als das Material für den Schichtaufbau. Der Trägerkern besitzt mindestens einen Abschnitt, dessen Au-Bendurchmesser dem innendurchmesser des herzustellenden Werkstückes entspricht oder geringfügig kleiner ist. Die Differenz bei einem kleineren Außendurchmesser Ist so bemessen, dass noch ausreichend Material für eine mechanische Bearbeitung der Innenflächen des Werkstück-Rohlings auf Endmaß vorhanden ist. Der Trägerkern kann In seiner äußeren Form unterschiedlich ausgebildet sein. Zur Herstellung von Werkzeugen mit einem kleinen Innendurchmesser wird ein rundstabförmiger Trägerkern verwendet. Der Trägerkern kann In seiner Länge auch so ausgeführt sein, dass auf diesem gleichzeitig mehrere Werkstücke hergestellt werden. Hierfür kann mit einem Laserkopf oder auch mit mehreren Laserköpfen gearbeitet werden. Zwischen den einzelnen Werkstücken ist während der Formgebung ein bestimmter Abstand einzuhalten. Der Trägerkern weist Abschnitte unterschiedlicher Durchmesser gemäß der Erfindung auf, sodass auf einem Trägerkern Werkstücke mit unterschiedlichen Innendurchmessern hergestellt werden können.

Der Trägerkern kann auch im Bereich des Werkstückaufbaus mit einer entsprechenden Kontur als Negativ versehen sein, mittels der dann die Innenform bzw. Innere Kontur des Werkstückes gebildet wird. Der Bereich des Werkstückaufbaus des Trägerkerns kann auch Abschnitte unterschiedlicher Außendurchmesser aufweisen, auf die ein In der Wanddicke unterschiedlicher Schichtaufbau erfolgt, sodass die Innenkontur des Werkzeuges stufenförmig ausgebildet ist.

Der Trägerkern kann auch als Hülse ausgebildet sein, die auf einem Schaft befestigt ist. Ein Teil des Schaftes dient zum Einspannen In das Spannfutter. Die Hülse Ist beispielsweise lösbar mit dem Schaft verbunden. Diese Variante hat den Vorteil, dass nach erfolgtem Schichtaufbau die Hülse vom Schaft gelöst wird und aus dem Werkstück nur noch die Hülse entfernt werden muss. Dies ist vor allem bei Werkstücken mit relativ großem Innendurchmesser von Vorteil. Der Schaft kann zur Wiederverwendung mit einer neuen Hülse bestückt werden.

Der Trägerkern muss nicht aus einem einheitlichen Material bestehen. Er kann auch als Verbundkörper ausgebildet sein, der aus unterschiedlichen Materialen hergestellt wird.

Zur Herstellung topfförmiger Werkstücke kann der Trägerkern aus zwei Abschnitten unterschledlicher Materialien bestehen, wobei der von der Spannvorrichtung abstehende Abschnitt aus Hartmetall besteht und zur Bildung als Teilstück des Bodens Im Werkstück verbleibt. In diesem Fall wird nur der hintere Abschnitt des Trägermaterials aus dem Werkstück entfernt.

Zur Herstellung von Werkstücken mit unterschledlichen Abmessungen sollte der Trägerkern noch einen zusätzlichen Abschnitt aufweisen, der zur **Bemessung** des Werkstückes dient. Ausgehend hiervon ist dann der Bewegungsablauf der Beschichtungseinhelt gesteuert.

Der Trägerkern wird vor dem eigentlichen Werkstückaufbau erwärmt, beispielsweise auf ca. 350 bis 450 °C. Die Temperatur ist abhängig von der Schmelztemperatur des Pulvers.

Vor dem eigentlichen Schichtaufbau kann auf den Trägerkern noch ein Trennmittel aufgetragen werden.

Während des schichtweisen Aufbaus des Werkstückes werden entweder Laserkopf oder Spannvorrichtung kontinuierlich oder absatzweise In Werkstücklängerichtung, In beide Richtungen, verfahren. Möglich ist auch, dass Laserkopf und Spannvorrichtung verfahren werden.

Zum Aufschmelzen des Metall- oder Keramikpulvers wird ein vom Laserauftragsschwelßen bekannter Laserkopf mit einem CO₂- oder Diodenlaser mit einer Leistung von 500 bis 1500 W eingesetzt. Die Pulverzuführung erfolgt koaxial unter Schutzgaszuführung, wobei das Pulver Im Arbeitspunkt des Laserstrahis geschmolzen wird, Indem ein auf den Laserbrennfleck fokussierter Pulverstrahl erzeugt wird. Das aufgetragene geschmolzene Pulver kühlt sich schnell wieder ab. Die einzustellenden Laserparameter sind abhängig vom eingesetzten Pulvermaterial. Als Metallpulver kommen vorzugsweise Hartmetalle oder Schnellarbeitsstähle zum Einsatz. Der Schmelzauftrag kann auch unter Vakuum durchgeführt werden.

Nach Beendigung des Schichtaufbaus wird der Trägerkern wieder entfernt, wenn dieser aus Kohlenstoffelektrodenmaterial besteht durch Ultraschallbehandlung bzw. bei Verwendung von welchen Stahlsorten durch eine spanabhebende Bearbeitung.

Die hergestellten Werkstücke, bei denen es sich um massive Bauteile handelt, die keine poröse Struktur besitzen, werden abschließend an ihren Außenseiten noch mechanisch oder elektroarosiv bearbeitet, um das gewünschte Endmaß zu erhalten.

Die Erfindung soll nachstehend an einem Ausführungsbeispiel erläutert werden. In der zugehörigen Zeichnung zeigen:
- Fig.1: eine erste Ausführung der Vorrichtung zur Herstellung eines Matrizenkerns, In vereinfachter Darstellung,
- Fig. 2: ein erstes Beispiel der Vorrichtung zur Herstellung mehrerer Matrizenkerne in vereinfachter Darstellung, das nicht ein Teil Erfindung ist
- Fig. 3: eine zweite Ausführung der Vorrichtung zur Herstellung eines Matrizenkerns mit unterschiedlicher Innenkontur, in vereinfachter Darstellung,
- Fig. 4: ein zweites Beispiel der Vorrichtung zur Herstellung eines topfförmigen Matrizenkerns, In vereinfachter Darstellung das nicht ein Teil der Erfindung ist und
- Fig. 5: ein drittes Beipiel zur Herstellung eines Matrizenkerns, In vereinfachter Darstellung, das nicht ein Teil Erfindung ist.

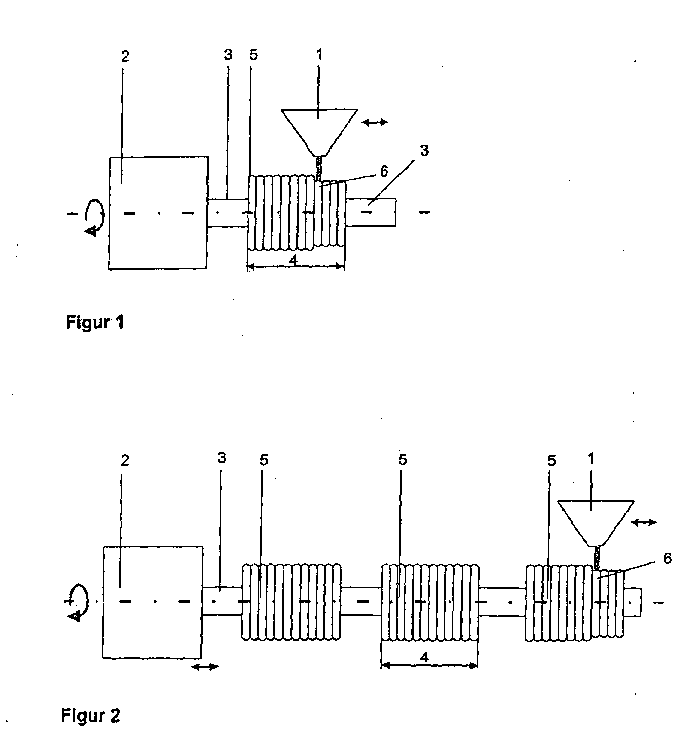

In Figur 1 Ist eine Vorrichtung zur Herstellung eines ringförmigen Matrizenkerns 5 für ein Umformwerkzeug vereinfacht dargestellt. Die Vorrichtung besteht aus einer an sich bekannten Beschichtungseinhelt 1 mit einem In Längsrichtung verfahrbaren Laserkopf mit einer Zuführung von Hartmetall- oder Keramikpulver in den Arbeitspunkt des Laserstrahis und einer rotierbaren Spannvorrichtung 2. In diese ist ein stabförmiger Trägerkern 3 aus Kohlenstoffelektrodenmaterial eingespannt. Der Trägerkern 3 besitzt einen Abschnitt 4, der für den Werkstückaufbau bestimmt ist. Dieser Ist in seinem Außendurchmesser geringfügig kleiner als der Innendurchmesser des herzustellenden Matrizenkerns 5. Zur Vorrichtung gehört noch eine nicht mit dargestellte Nachbearbeitungseinheit zur Entfernung des Trägerkerns 3 aus dem fertigen Roh-Matrizenkern 5 und zur abschließenden mechanischen Bearbeitung der Innen und Außenflächen des Kerns 5.

Während der Rotation des Trägerkerns 3 wird mittels des Laserkopfes aufgeschmolzenes Hartmetallpulver unter Bildung einer kontinulerlichen Spur 6 durch einen spiralförmigen Wickelvorgang auf den Abschnitt 4 des Trägerkerns 3 aufgetragen. Durch die Rotation des Trägerkerns 3 und die Hin- und Herbewegung des Laserkopfes der Beschichtungseinheit 1 erfolgt aufgrund sich überlagernder Spuren 6 ein schichtweiser Werkstückaufbau des Matrizenkerns 5 als Urformprozess. Mit zunehmendem Schichtaufbau bewegt sich der Laserkopf bzw. die Beschichtungseinheit 1 In radialer Richtung langsam vom Werkstück weg. In Fig. 2 ist ein Beispiel gezeigt, bei der auf dem Trägerkern 3 nacheinander drei Matrizenkerne 5 hergestellt werden. In diesem Fall kann die Spannvorrichtung 2 zusätzlich noch In Längsrichtung verfahrbar ausgeführt sein. Anstelle einer Beschichtungseinheit 1 können auch drei Beschichtungseinheiten bzw. Laserköpfe angeordnet sein, sodass der Werkstückaufbau für alle drei Matrizenkerne 5 gleichzeitig erfolgen kann.

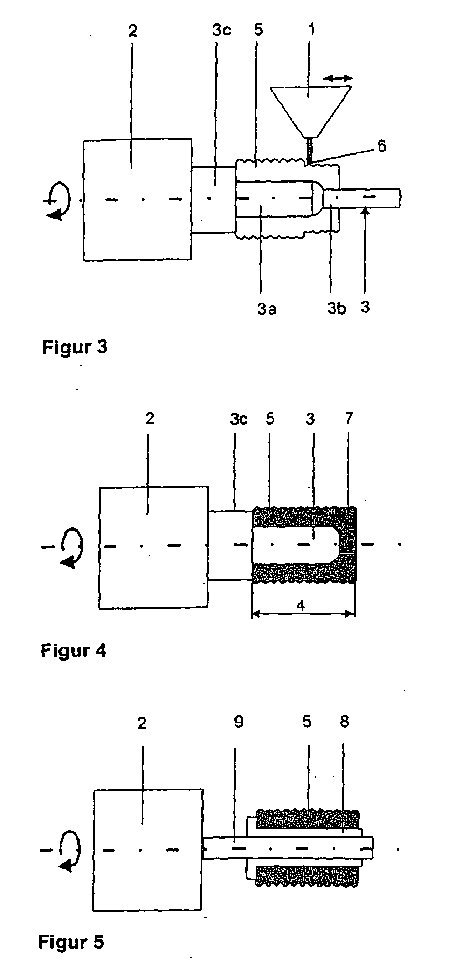

In Fig. 3 Ist eine Ausführung der Erfindung zur Herstellung eines Matrizenkerns 5 mit Abschnitten unterschiedlicher Innendurchmesser gezeigt Der Trägerkern 3 besitzt an die Innenkontur des Matrizenkerns 5 angepasste Abschnitte 3a, 3b unterschiedlicher Außendurchmesser. Zusätzlich hat der Trägerkern 3 noch einen im Außendurchmesser vergrößerten Abschnitt 3c, der zwischen dem Spannfutter 2 und dem Abschnitt 4 für den Werkstückaufbau angeordnet ist und als stirnseitige Begrenzungsfläche für den herzustellenden Matrizenkern 5 dient. Ein solcher Abschnitt ist immer dann als Maßbezug für die Einstellung der Bewegung der Beschichtungseinheit erforderlich, wenn die Innenkontur des herzustellenden Werkstückes unterschiedliche Abmessungen aufweist.

In den Figuren 4 und 5 sind zwei weitere Beispeile gezeigt, wobei auf die Darstellung der Beschichtungseinheit verzichtet wurde.

In Fig. 4 Ist die Herstellung eines topfförmigen Roh-Matrizenkerns 5 gezeigt. Der Trägerkern 3 besitzt an seinem abstehenden Ende einen Abschnitt 7 aus Hartmetall. Nach dem Aufbau des Matrizenkerns 5 verbleibt dieser Abschnitt 7 In dem Matrizenkern 5 und wird nicht mit entfernt. Während der Herstellung des topfförmigen Matrizenkerns 5 werden zuerst um den Hartmetallabschnitt 7 eine oder mehrere Spuren an zugeführter Hartmetallschmelze "gewickelt", bis zum Erreichen des Außenumfanges des Trägerkorns 3. Danach erfolgt dann der weltere "Wickelvorgang" Ober die gesamte Länge des Abschnitts 4 des Trägerkerns 3, bis zum vollständigen Aufbau des Matrizenkerns 5.

Eine Ausführung zur Herstellung eines ringförmigen Matrizenkerns 5 mit einem als Hülse 8 ausgebildeten Trägerkern ist In Fig. 5 gezeigt. Die aus Kohlenstoffelektrodenmaterial bestehende Hülse 8 ist auf einem schaftförmigen Element 9 lösbar befestigt. Die äußere Mantelfläche der Hülse 8 bildet den Abschnitt zum Aufbau des Matrizenkerns 5. Nach Fertigstellung des Matrizenkerns 5 wird diese zusammen mit der Hülse 8 vom schaftförmigen Element 9 abgezogen und In der Nachbearbeitungseinheit durch Ausbohren entfernt. Das schaftförmige Element kann für einen weiteren Herstellungsvorgang wieder verwendet werden.

Nachfolgend wird die Verfahrensweise an einem Beispiel zur Herstellung eines ringförmigen Werkzeugeinsatzes (Matrizenkern) für ein Umformwerkzeug aus Hartmetall (Wolframkarbid-Nickel) mit einem Innendurchmesser von 20 mm, einem Außendurchmesser von 40 mm und einer Breite von 20 mm erläutert. Dass Beispeil ist nicht Teil den Erfindung.

Der Trägerkern aus Graphit (Kohlenstoffelektrodenmaterial) kann an Luft Temperaturen bis 400°C und unter Schutzgas bis 2500 °C ausgesetzt werden. Er besitzt eine gute Nichthenetzung gegenüber vielen Metalischmelzen. Zwischen dem Trägermaterial und dem aufzuschmelzenden Metallpulver kann somit keine schmelzmetallurgische Verbindung entstehen. Der Trägerkern mit einem Außendurchmesser von 20 mm und Länge 80 mm wird einseitig In eine rotierbare Spannvorrichtung eingespannt (Einspannlänge ca. 30 mm) und mittels einer externen Helzvorrichtung wird der Endabschnift (ca. 30 mm) bis auf ca. 400 °C erwärmt. Die Spannvorrichtung wird In Rotation versetzt (100 min⁻¹). Dem In beiden Längerichtungen und In seiner Höhe verfahrbaren Laserkopf wird zum Aufbau des Werkstückes unter Schutzgasatmosphäre ein Wolframkarbid-Nickel (WC-Ni)-Pulvergernisch (16 bis 18% Ni und 5 bis 5,2 % C) fokussiert dem Laserstrahl zugeführt und im Arbeitspunkt des Laserstrahts aufgeschmolzen und als flüssige Schmelze mit einer Spurbreite von ca. 2 mm auf den für den Werkstückaufbau bestimmten Abschnitt des Tragerkerns aufgetragen. Dabei wird der Laserkopf mit sehr geringer Geschwindigkeit kontinuierlich zyklusweise hin- und herbewegt. Nach Beendigung eines Zyklus, einer Bewegungsstrecke von ca. 20 mm, ist unter Bildung von 10 umlaufenden, aneinander angrenzenden Spuren eine Lage entstanden. Aufgrund der sehr schnellen Abkühlung der aufgetragenen Schmelze ist eine Tropfenblidung ausgeschlossen. Das schmetzflüssige Metallpulver wird In einer Art "Wickelvorgang" auf den Trägerkern aufgetragen. In weiteren Zyklen erfolgt Lage für Lage ein kontinuierlicher Schichtaufbau bis zum Errelchen des endgültigen Außendurchmessers. Schmelzmetallurgisch verbinden sich die einzelnen Spuren und Lagen zu einem einheitlichen Gefüge. Nach Erreichen des gewünschten Außendurchmessers mit geringem Übermaß wird der Urformprozess beendet

Die Fertigungedauer für einen Ring mit einer Wanddicke von 20 mm und einer Breite von 20 mm beträgt ca.10 min. Der Trägerkern mit dem ringförmigen Werkstück-Rohling wird aus der Spannvorrichtung entnommen und das überstehende Tellstück des Trägerkerns abgetrennt. Danach wird das Im Werkstück-Rohling noch verbliebene Reststück des Trägerkerns durch Ausbohren entfernt. Abschließend wird der Werkstück-Rohling an seinen Innen- und Außenseiten durch Schleifen bis auf Endmaß bearbeltet.

## Patentansprüche

1. Verfahren zur Herstellung von Ringen oder topfförmigen Kernen als rotationssymmetrische Werkstücke aus Hartmetall- und/oder Keramikpulver für Matrizen für Werkzeuge zur Massivumformung oder zum Verpressen von Pulver, wobei, ein Trägerkern (3) oder ein schaftförmiges Element (9) mit mindestens einem Trägerkern (8) In eine rotierbare Spanneinrlchtung (2) eingespannt und In Rotation versetzt wird, der Trägerkern (3, 8) aus hochtemperaturbeständlgem Material besteht und mindestens einen Abschnitt (4) besitzt, dessen Außendurchmesser dem Innendurchmesser des herzustellenden Ringes oder Kernes (5) entspricht oder geringfüglg kleiner ist, und in einem definierten Abstand zur Spannelnrichtung (2) auf die Mantelfläche des Trägerkerns (3, 8), der Abschnitte unterschiedlicher Außendurchmesser besitzt, auf die ein In der Wanddicke unterschiedlicher Schichtaufbau erfolgt, mittels eines Laserkopfes Metali- und/oder Keramikpulver aufgeschmolzen und schichtweise bis zur Ausbildung der endgültigen Wanddicke des Werkstück-Rohlinge aufgetragen wird, wobei der Laserkopf hin- und herbewegt wird und durch überlagernde Spuren (6) der schichtweise Werkstückaufbau des Matrizenkerns (5) als Urformprozess erfolgt, und nach erfolgter Abkühlung der Trägerkern (3, 8) teilweise oder vollständig wieder aus dem Werkstück-Rohling entfernt und der Rohling an seinen Innen- und/oder Außenseiten mechanisch bis auf Endmaß bearbeitet wird.

2. Verfahren nach Anspruch 1, **dadurch gekennzeichnet, dass** die äußere Form des Trägerkerns (3,8) im Bereich des Werkstückaufbaus mit einer die Innenform des herzustellenden Werkstückes (5) bildenden Kontur versehen ist.

3. Verfahren nach einem der Ansprüche 1 oder 2, **dadurch gekennzeichnet, dass** auf dem Trägerkern (3,8) in definierten Abständen mehrere Werkstück-Rohlinge gebildet werden.

4. Verfahren nach einem der Ansprüche 1 bis 3, **dadurch gekennzeichnet, dass** der Trägerkern (3,8) aus Kohlenstoffelektrodenmaterial besteht.

5. Verfahren nach einem der Ansprüche 1 bis 4, **dadurch gekennzeichnet, dass** die Abschnitte unterschiedlicher Außendurchmesser des Trägerkerns (3, 8) an die jeweilige Innenkontur des herzustellenden Werkstückes (5) angepasst sind.

6. Verfahren nach einem der Ansprüche 1 bis 5, **dadurch gekennzeichnet, dass** zur Bildung der einzelnen Schichten eines Werkstückes (5) eine einzige Pulverzusammensotzung aus Hartmetall und/oder Keramik eingesetzt wird.

7. Verfahren nach einem der Ansprüche 1 bis 5, **dadurch gekennzeichnet, dass** zur Bildung der einzelnen Schichten oder Abschnitten von Schichten eines Werkstückes (5) unterschiedliche Pulverzusammensetrungen aus Hartmetall und/oder Keramik eingesetzt werden.

8. Verfahren nach einem der Ansprüche 1 bis 7, **dadurch gekennzeichnet, dass** der Trägerkern (3,8) aus mindestens zwei Abschnitten unterschiedlicher Materialien besteht, wobei ein Abschnitt im Werkstück verbleibt und der andere Abschnitt entfernt wird.

9. Verfahren nach einem der Ansprüche 1 bis 8, **dadurch gekennzeichnet, dass** als Trägerkern (3,8) eine Hülse eingesetzt wird, die mit dem schaftförmigen Element lösbar verbunden ist.

10. Vorrichtung zur Durchführung des Verfahrens nach einem der der Ansprüche 1 bis 9, bestehend aus mindestens einer Beschichtungseinheit (1), einer rotierbaren Spannvorrichtung (2), einem in die Spannvorrichtung (2) einspannbaren Trägerkem (3) oder einem einspannbaren schaftförmigen Element (9) mit einem Trägerkem (8), wobei der Trägerkern (3, 8) aus hochtemperaturbeständigem Material besteht und mindestens einen Abschnitt (4) für den Werkstückaufbau aufweist, dessen Außendurchmesser dem Innendurchmesser des herzustellenden Werkstückes (5) entspricht oder geringfügig kleiner ist, **dadurch gekennzeichnet, dass** die Vorrichtung einen eine Hin- und Herbewegung ausführenden Laserkopf mit einer Zuführung von Hartmetall- und/oder Keramikpulver in den Arbeitspunkt des Laserstrahls aufweist und der Träger (3, 8) Abschnitte unterschiedlicher Außendurchmesser besitzt, auf die ein in der Wanddicke unterschiedlicher Schichtaufbau erfolgt, und einer Nachbearbeitungseinheit zur Entfernung des Trägerkems (3, 8) und zur Bearbeitung der Innen- und/oder Außenseiten des Werkstücks (5) auf Endmaß.

11. Vorrichtung nach Anspruch 10, **dadurch gekennzeichnet, dass** der für den Werkstückaufbau bestimmte Abschnitt (4) des Trägerkerns (3, 8) eine die innenform des Werkstückes (5) bildende Kontur aufweist.

12. Vorrichtung nach einem der Ansprüche 10 oder 11, **dadurch gekennzeichnet, dass** der Trägerkern (3) mehrere Abschnitte (4) zum Aufbau von Werkstücken (5) besitzt, die In einem definierten Abstand zueinander angeordnet sind.

13. Vorrichtung nach einem der Ansprüche 10 bis 12, **dadurch gekennzeichnet, dass** der Trägerkern (3) aus Abschnitten unterschiedlicher Materialien besteht.

14. Vorrichtung nach einem der Ansprüche 10 bis 13, **dadurch gekennzeichnet, dass** der Trägerkern (3) an seinem von der Spannvorrichtung (2) abstehenden Ende einen Abschnitt (7) aus Hartmetall aufweist, der In dem Werkstück (5) verbleibt.

## Claims

1. Method for producing rings or cup-shaped cores as rotationally symmetrical workpieces, made of cemented carbide and/or ceramic powder for dies for workpieces for massive forming or for pressing powder, wherein a beam core (3) or a shaft-shaped element (9) with at least one beam core (8) is clamped into a rotatable clamping device (2) and caused to rotate, the beam core (3,8) is made of high temperature-resistant material and has at least one segment (4), whose external diameter corresponds to, or is slightly smaller than, the internal diameter of the ring or core (5) to be produced, and metal and/or ceramic powder is fused at a defined distance from the clamping fixture (2) by means of a laser head onto the jacket surface of the beam core (3,8), which has segments of different external diameters on which a layer of differing wall thickness is built up, and said powder is applied in layers until the final wall thickness of the workpiece blank has been formed, wherein the laser head is moved in a reciprocating manner, and the workpiece of the die core (5) is built up in layers by overlapping beads (6) as a forming process, and the beam core (3,8) is partly or completely removed again from the workpiece blank after cooling, and the blank is machined on its internal and/or external sides to achieve its final dimensions.

2. Method according to claim 1, **characterized in that** the external shape of the beam core (3, 8) in the area of the build-up of the workpiece is fitted with a contour forming the internal shape of the workpiece (5) to be produced.

3. Method according to one of the claims 1 or 2, **characterized in that** several workpiece blanks are formed at defined distances on the beam core (3, 8).

4. Method according to one of the claims 1 to 3, **characterized in that** the beam core (3, 8) consists of carbon electrode material.

5. Method according to one of the claims 1 to 4, **characterized in that** the segments of different external diameter of the beam core (3, 8) are adjusted to the respective internal contour of the workpiece (5) to be produced.

6. Method according to one of the claims 1 to 5, **characterized in that** a single powder composition of cemented carbide and/or ceramic is used to form the individual layers of a workpiece (5).

7. Method according to one of the claims 1 to 5, **characterized in that** different powder compositions of cemented carbide and/or ceramic are used to form the individual layers or sections of layers of a workpiece (5).

8. Method according to one of the claims 1 to 7, **characterized in that** the beam core (3, 8) consists of at least two segments of different materials, with one segment remaining in the workpiece and the other segment removed.

9. Method according to one of the claims 1 to 8, **characterized in that** a sleeve detachably connected to the shaft-formed element is used as a beam core (3, 8).

10. Device for carrying out the method according to one of the claims 1 to 9, comprising at least a coating unit (1), a rotatable clamping device (2), a beam core (3) clampable into the clamping device (2), or a clampable, shaft-shaped element (9) with a beam core (8), wherein the beam core (3, 8) is made of high temperature-resistant material, and has at least one segment (4) for building up the workpiece, whose external diameter corresponds to, or is slightly smaller than, the internal diameter of the workpiece (5) to be produced, **characterized in that** the device has a reciprocating laser head with cemented carbide and/or ceramic powder fed into the working point of the laser beam, and the beam core (3,8) has segments of different external diameters on which a layer of different wall thickness is built up, and a post-processing unit for removing the beam core (3, 8) and for machining the internal and/or external sides of the workpiece (5) to achieve its final dimensions.

11. Device according to claim 10, **characterized in that** the segment (4) of the beam core (3, 8) intended for building up the workpiece has a contour forming the internal shape of the workpiece (5).

12. Device according to one of the claims 10 or 11, **characterized in that** the beam core (3) has several segments (4) for building up workpieces (5), said segments being at a defined distance from each other.

13. Device according to one of the claims 10 to 12, **characterized in that** the beam core (3) consists of segments of different materials.

14. Device according to one of the claims 10 to 13, **characterized in that** the beam core (3) at its end protruding from the clamping device (2) has a segment (7) made of cemented carbide which remains in the workpiece (5).

## Revendications

1. Procédé pour la fabrication d'anneaux ou de noyaux en forme de pot ,sous forme de pièce à rotation symétrique, à partir de poudre de métal dur et/ou de poudre de céramique pour matrices à outils pour le formage ou l'injection de poudre, un noyau de support (3) ou un élément en forme de tige (9) muni d'au moins un noyau de support (8) étant serré dans un dispositif de serrage (2) rotatif et étant mis en rotation, le noyau de support (3, 8) se composant d'un matériau résistant aux températures élevées et possédant au moins une section (4) dont le diamètre extérieur correspond au diamètre intérieur de l'anneau ou du noyau (5) à fabriquer ou est légèrement inférieur à celui-ci, et étant liquéfié à un écart défini par rapport au dispositif de serrage (2) sur l'enveloppe du noyau de support (3, 8) possédant des sections de différent diamètre extérieur dans l'épaisseur desquelles sont formées différentes couches, **caractérisé en ce que** de la poudre de métal et/ou de céramique est liquéfiée au moyen d'une tête laser et appliquée en couches jusqu'à ce que l'épaisseur définitive du lopin soit formée, la tête laser étant déplacée en va-et-vient, et la structure en couches du noyau de matrice (5) étant réalisée par préformage par couches superposées les unes sur les autres (6), et au terme de son refroidissement, le noyau de support (3, 8) est retiré partiellement ou en totalité du lopin et le lopin est façonné mécaniquement sur ses faces intérieures et/ou extérieures jusqu'à obtention de sa taille finale.

2. Procédé selon la revendication 1, **caractérisé en ce que** la forme extérieure du noyau de support (3, 8) est pourvue au niveau de la structure de la pièce d'un contour formant la forme intérieure de la pièce à fabriquer (5).

3. Procédé selon l'une des revendications 1 ou 2, **caractérisé en ce que** plusieurs lopins sont formés sur le noyau de support (3, 8) à des écarts définis.

4. Procédé selon l'une des revendications 1 à 3, **caractérisé en ce que** le noyau de support (3, 8) se compose de matériaux pour électrode de carbone.

5. Procédé selon l'une des revendications 1 à 4, **caractérisé en ce que** les sections de différent diamètre extérieur des noyaux de support (3, 8) sont adaptées au contour intérieur respectif de la pièce à fabriquer (5).

6. Procédé selon l'une des revendications 1 à 5, **caractérisé en ce que**, pour former chacune des couches d'une pièce (5), on utilise un seul composé de poudre constitué de métal dur et/ou de céramique.

7. Procédé selon l'une des revendications 1 à 5, **caractérisé en ce que**, pour former chacune des couches ou sections de couche d'une pièce (5), on utilise différents composés de poudre constitués de métal dur et/ou de céramique.

8. Procédé selon l'une des revendications 1 à 7, **caractérisé en ce que** le noyau de support (3, 8) se compose d'au moins deux sections constituées de matériaux différents, l'une des sections restant dans la pièce et l'autre étant retirée.

9. Procédé selon l'une des revendications 1 à 8, **caractérisé en ce que**, comme noyau de support (3, 8), on utilise une douille assemblée à l'élément en forme de tige de manière amovible.

10. Dispositif pour la mise en oeuvre du procédé selon l'une des revendications 1 à 9, qui se compose d'au moins une unité de revêtement par couches (1), d'un dispositif de serrage (2) rotatif, d'un noyau de support (3) pouvant être serré dans le dispositif de serrage (2) ou d'un élément (9) en forme de tige pouvant être serré et muni d'un noyau de support (8), le noyau de support (3, 8) se composant d'un matériau résistant aux températures élevées et présentant au moins une section (4) destinée à la structure de la pièce dont le diamètre extérieur correspond au diamètre intérieur de la pièce à fabriquer (5) ou est légèrement inférieur à celui-ci, **caractérisé en ce que** le dispositif présente une tête laser à déplacement de va-et-vient munie d'une amenée de poudre de métal dur et/ou de céramique dans le point de fonctionnement du rayon laser, et le noyau de support (3, 8) possède des sections de différent diamètre extérieur dans l'épaisseur desquelles sont formées différentes couches, et se compose d'une unité de finition destinée à retirer le noyau de support (3, 8) et à façonner les faces intérieures et/ou extérieures de la pièce (5) jusqu'à obtention de la taille définitive.

11. Dispositif selon la revendication 10, **caractérisé en ce que** la section (4) du noyau de support (3, 8) destinée à la structure de la pièce présente un contour formant la forme intérieure de la pièce (5).

12. Dispositif selon l'une des revendications 10 ou 11, **caractérisé en ce que** le noyau de support (3, 8) présente plusieurs sections (4) destinées à structurer les pièces (5) disposées à un écart défini les unes par rapport aux autres.

13. Dispositif selon l'une des revendications 10 à 12, **caractérisée en ce que** le noyau de support (3) se compose de sections constituées de matériaux différents.

14. Dispositif selon l'une des revendications 10 à 13, **caractérisé en ce que** le noyau de support (3) présente à son extrémité en saillie par rapport au dispositif de serrage (2) une section (7) constituée de métal dur qui reste dans la pièce (5).
